# FASCICULE DE BREVET EUROPEEN

(11) **EP 2 281 108 B1**
(45) Date de publication et mention de la délivrance du brevet: **29.07.2015**
(21) Numéro de dépôt: 09738342.6
(22) Date de dépôt: 16.04.2009
(51) Int. Cl.: F01D 5/08, F02C 6/08, F04D 27/02, F04D 29/58

(54) **DISPOSITIF DE PRÉLÈVEMENT D'AIR D'UN COMPRESSEUR D'UNE TURBOMACHINE**
ZAPFLUFTENTNAHMEVORRICHTUNG FÜR EINEN VERDICHTER EINER STRÖMUNGSMASCHINE
BLEED AIR APPARATUS FOR A COMPRESSOR OF A TURBO MACHINE

(30) Priorité: 24.04.2008 FR 0802297
(43) Date de publication de la demande: 09.02.2011
(73) Titulaire: Snecma, 75015 Paris (FR)
(72) Inventeur: BEHAGHEL, Laurent, F-91230 Montgeron (FR); GILLE, Laurent, F-77190 Dammarie Les Lys (FR); PEGOUET, Benjamin, F-95000 Cergy (FR)
(74) Mandataire: Ramey, Daniel
(86) Numéro de dépôt international: PCT/FR2009/000446
(87) Numéro de publication internationale: WO 2009/133308

(56) Documents cités:
- EP-A- 1 120 543
- EP-A- 1 329 591
- DE-C- 865 773
- DE-C1- 3 606 597
- FR-A1- 2 614 654
- US-A- 3 647 313

## Description

La présente invention concerne des moyens de prélèvement d'air centripète dans un rotor de compresseur d'une turbomachine telle qu'un turboréacteur ou un turbopropulseur d'avion.

Les disques aubagés d'un rotor de compresseur sont reliés entre eux par une paroi coaxiale de révolution sensiblement cylindrique ou tronconique qui s'étend entre les disques. Cette paroi de liaison des disques peut être formée d'une seule pièce avec un premier disque ou être rapportée et fixée, par exemple par brasage ou soudage, à une de ses extrémités axiales sur une face latérale de ce premier disque, et son extrémité axiale opposée peut comprendre une bride annulaire fixée par exemple à l'aide de moyens du type vis/écrou sur un second disque.

Il est connu d'équiper ce rotor de moyens de prélèvement d'air à écoulement centripète, pour alimenter des systèmes de ventilation et/ou de refroidissement d'étages aval du compresseur et des jantes de turbine de la turbomachine, et pour assurer la purge de la turbine (DE-C-865 773, DE-C1-36 06 597, qui montre les caractéristiques techniques du préambule de la revendication indépendante 1,

EP-A2-1 120 543 et EP-A1-1 329 591).

Dans la technique actuelle, ces moyens de prélèvement comprennent des passages traversants formés dans la paroi de liaison des disques de rotor et débouchant dans une chambre annulaire formée à l'intérieur de la paroi de révolution entre deux disques du rotor.

Une partie de l'air s'écoulant dans la veine du compresseur est prélevée par les passages traversants de la paroi du rotor et passe dans la chambre annulaire où elle s'écoule de manière centripète le long des disques de rotor, puis circule d'amont en aval dans la turbomachine, à l'extérieur d'un fourreau cylindrique axial, pour atteindre la turbine. Cependant, les turbulences et les pertes de charge dans la chambre annulaire entre les disques de rotor sont importantes, ce qui amène à effectuer le prélèvement d'air sur un étage aval du compresseur, et se traduit par une augmentation de la consommation spécifique de la turbomachine.

De plus, l'air prélevé s'échauffe à cause de sa vitesse de rotation élevée par rapport à celle des disques. Lorsque le coefficient Ke d'entraînement de l'air (qui est égal au rapport de la vitesse tangentielle de l'air prélevé et circulant dans la turbomachine sur la vitesse de rotation du rotor du compresseur de la turbomachine) est supérieur à 1, il est nécessaire d'augmenter le débit d'air prélevé pour assurer un bon refroidissement des composants de la turbine. Cependant, dans certaines zones, en particulier dans la chambre inter-disques et au voisinage du fourreau cylindrique, le coefficient Ke peut atteindre 2,5 dans la technique actuelle.

Pour réduire cet inconvénient, on a proposé de monter dans la chambre entre les disques une rangée annulaire de tubes radiaux qui sont fixés sur ces disques autour du fourreau par des moyens appropriés (voir le document EP-A1-1 262 630). L'air prélevé par les passages traversants de la paroi de liaison est contraint de passer dans les tubes radiaux qui tournent à la même vitesse que les disques. L'air en sortie de ces tubes arrive au niveau du fourreau cylindrique avec une vitesse équivalente à celle des disques (Ke=1), ce qui permet de limiter les pertes de charge et l'augmentation de température de l'air prélevé.

Cependant, les pertes de charge à l'entrée dans la chambre annulaire restent importantes. De plus, les moyens de fixation de ces tubes radiaux sont complexes car ils doivent limiter les vibrations des tubes en fonctionnement, ce qui se traduit par un coût relativement important et par une augmentation de masse.

L'invention a notamment pour but d'apporter une solution plus simple, plus efficace et plus économique à ces problèmes de la technique actuelle.

Elle propose à cet effet un rotor de compresseur d'une turbomachine, comprenant au moins deux disques coaxiaux portant des aubes et reliés entre eux par une paroi de révolution coaxiale sensiblement cylindrique, et des moyens de prélèvement d'air centripète comportant des passages d'air traversant la paroi et débouchant dans une chambre formée à l'intérieur de la paroi de révolution entre les deux disques, caractérisé en ce qu'une paroi de guidage d'air est montée dans la chambre et comporte une partie sensiblement cylindrique qui s'étend le long de la paroi de révolution et à faible distance radiale de celle-ci pour définir avec cette paroi un passage annulaire d'écoulement axial du flux d'air sortant des passages, jusqu'à un des disques du rotor.

Ainsi, selon l'invention, l'air sortant des passages traversant la paroi de révolution est canalisé le long de cette paroi jusqu'à un des disques de rotor et ne peut plus parvenir à l'espace central de la chambre entre les disques. On évite ainsi l'éclatement des jets d'air en sortie des passages traversants et la formation de tourbillons générateurs de pertes de charge. L'air guidé le long de la paroi de révolution s'écoule ensuite de façon naturelle le long des disques en direction de l'axe de rotation en formant sur ces disques des couches où les vitesses de l'air sont essentiellement radiales. Ces couches s'apparentent à des phénomènes atmosphériques ou océaniques et sont appelées couches d'Ekman.

La distance radiale entre la paroi de guidage et la paroi de révolution reliant les disques est notamment déterminée en fonction du débit d'air prélevé par les passages précités. Un compromis doit être établi de façon à guider au mieux l'air prélevé sans générer de tourbillon ni de recirculation, et sans gêner l'écoulement de cet air. Des calculs numériques de dynamique des fluides peuvent être utilisés pour calculer cette distance radiale. Elle est par exemple de l'ordre de quelques millimètres, voire de quelques centimètres.

Dans un exemple de réalisation, le gain en pertes de charge du flux d'air prélevé peut atteindre 50% par rapport à la technique antérieure. Du fait de cette diminution des pertes de charge, il est envisageable de prélever l'air sur un étage du compresseur plus en amont, ce qui permet de diminuer la consommation spécifique de la turbomachine, ainsi que la température de l'air prélevé.

Les passages d'air de la paroi peuvent être inclinés par rapport à l'axe de rotation du rotor. Ces passages d'air sont par exemple inclinés d'amont en aval vers l'intérieur ou vers l'extérieur pour donner une composante axiale au fluide en sortie des passages d'air et ainsi faciliter l'écoulement de ce fluide le long de la paroi de révolution. Ces passages d'air peuvent être formés sur une partie d'extrémité aval de la paroi de révolution, en aval d'un joint à labyrinthe destiné à coopérer avec un redresseur monté entre les deux disques du rotor.

Selon une autre caractéristique de l'invention, la paroi de guidage est rapportée et fixée sur l'un des disques, à l'intérieur de la chambre annulaire.

Cette paroi de guidage peut être sectorisée pour faciliter son montage, et est par exemple réalisée en matériau métallique léger ou en matériau composite. Elle peut être conçue pour pouvoir s'intégrer dans un environnement existant, et peut par exemple comprendre à une extrémité une bride annulaire d'assemblage sur une bride annulaire de fixation de la paroi de révolution sur un des disques.

La paroi de guidage selon l'invention est moins coûteuse et plus facile à monter que les tubes radiaux utilisés dans la technique antérieure. Elle est aussi plus compacte et plus simple, ce qui se traduit notamment par un gain de masse et en durée de vie des moyens de prélèvement d'air selon l'invention.

Le passage annulaire axial d'écoulement du flux d'air défini entre la paroi de guidage et la paroi de révolution peut être à section sensiblement constante. La partie cylindrique de la paroi de guidage peut être reliée à une extrémité à un rebord annulaire sensiblement radial s'étendant en direction de l'axe de rotation sensiblement parallèlement et à faible distance d'un des disques pour définir avec ce disque un passage annulaire radial d'écoulement du flux d'air en direction du fourreau précité. Ce rebord s'étend préférentiellement sur une fraction de la dimension radiale de la chambre. La paroi de guidage a alors une forme sensiblement en L en section.

La distance radiale entre la paroi de guidage et la paroi de révolution et la distance axiale entre le rebord annulaire radial et le disque sont notamment déterminées pour empêcher des recirculations et des tourbillons d'air dans la chambre inter-disques. Grâce à ce contrôle de l'écoulement de l'air dans la chambre, les pertes de charge peuvent être notablement réduites.

Préférentiellement, la partie cylindrique de la paroi de guidage comprend des plots d'appui sur la paroi de révolution pour limiter les vibrations et les flexions ce cette paroi de guidage en fonctionnement.

Le rebord radial de la paroi de guidage peut porter des ailettes de guidage et/ou de redressement du flux d'air dans le passage radial. Les ailettes permettent d'entraîner l'air le long du disque, de façon à ce que sa vitesse soit proche de celle du disque (Ke=1). Les ailettes peuvent être inclinées de façon à produire en fonctionnement un effet d'aspiration du flux d'air. Ces ailettes sont de préférence appliquées sur l'un des disques.

Avantageusement, l'extrémité de la paroi de guidage, opposée au rebord radial, est appliquée sur la paroi de révolution et empêche l'air sortant des passages traversants de s'écouler le long de l'autre disque.

La présente invention concerne également une turbomachine, telle qu'un turboréacteur ou un turbopropulseur d'avion, caractérisée en ce qu'elle comprend un rotor de compresseur tel que décrit ci-dessus.

La présente invention sera mieux comprise et d'autres détails, caractéristiques et avantages de la présente invention apparaîtront plus clairement à la lecture de la description suivante faite à titre d'exemple non limitatif et en référence aux dessins annexés, dans lesquels :
- la figure 1 est une demi-vue schématique partielle en coupe axiale d'une turbomachine comprenant notamment un compresseur, une chambre de combustion et une turbine ;
- la figure 2 est une demi-vue schématique partielle en coupe axiale d'un rotor de compresseur équipé de moyens de prélèvement d'air centripète selon l'invention, à plus grande échelle que la figure 1 ;
- la figure 3 est une vue schématique en perspective d'une paroi cylindrique de guidage des moyens de prélèvement d'air de la figure 2 ;
- la figure 4 est une vue correspondant à la figure 2 et représente une variante de réalisation des moyens de prélèvement d'air selon l'invention ;
- la figure 5 est une vue en coupe selon la ligne A-A de la figure 4.

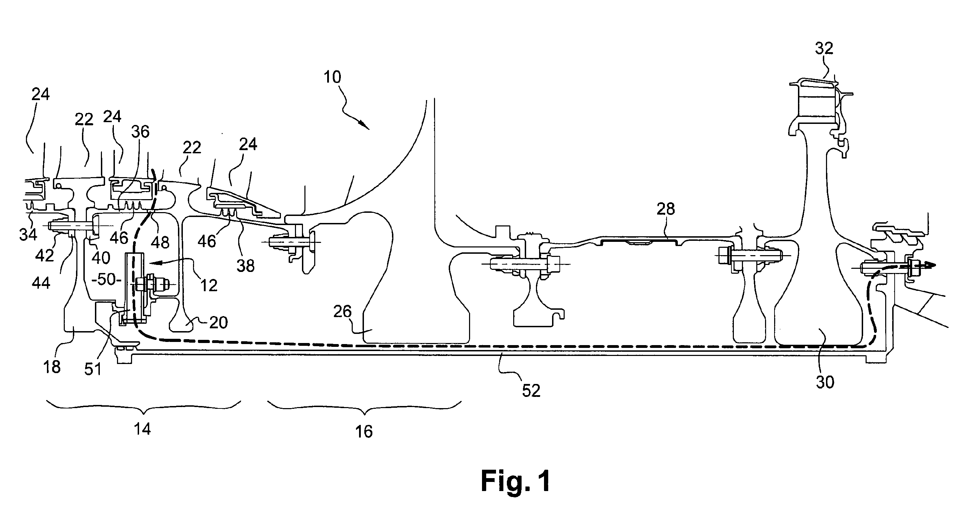

On se réfère d'abord à la figure 1 qui représente une partie d'une turbomachine 10 équipée de moyens 12 de prélèvement d'air centripète selon la technique antérieure.

La turbomachine comprend notamment un compresseur, une chambre de combustion et une turbine. Le compresseur 14, 16 partiellement représenté comprend un module amont comportant plusieurs étages axiaux 14 de compression et un module aval comportant un étage centrifuge 16 de compression. Chaque étage axial 14 du compresseur comprend une roue de rotor formée d'un disque 18, 20 portant à sa périphérie externe des aubes 22, et un redresseur 24 situé en aval de la roue et formé d'une rangée annulaire d'aubes fixes de redressement.

Les disques de rotor 18, 20 sont fixés coaxialement les uns aux autres et au rouet 26 de l'étage centrifuge 16 qui est lui-même fixé par un carter cylindrique interne 28 de la chambre de combustion à une roue de rotor de la turbine. Cette roue de turbine est formée par une jante 30 portant à sa périphérie externe des aubes 32.

Les disques 18, 20 du rotor du compresseur sont reliés entre eux et au rouet 26 par des parois 34, 36 et 38 de révolution sensiblement cylindriques ou tronconiques qui s'étendent autour de l'axe de rotation du rotor.

La figure 1 montre seulement deux disques 18, 20 du rotor du compresseur. Le disque aval 20 est formé d'une seule pièce avec une paroi amont 36 sensiblement cylindrique de fixation sur le disque amont 18, et avec une paroi aval 38 sensiblement tronconique de fixation sur le rouet 26. L'extrémité amont de la paroi cylindrique 36 porte une bride annulaire 40 qui est appliquée sur une face radiale aval du disque 18 et fixée sur ce disque par des moyens 42 du type vis/écrou. Les parois 36, 38 pourraient également être rapportées et fixées, par exemple par soudage ou brasage, sur le disque 20.

Le disque amont 18 est lui-même fixé à un disque (non visible) situé plus en amont par une autre paroi cylindrique 34. Cette paroi 34 s'étend vers l'aval depuis le disque non visible et son extrémité aval comprend une bride annulaire 44 de fixation sur le disque 18. Cette bride 44 est appliquée sur une face radiale amont du disque 18 et est fixée sur ce disque par les moyens 42 précités.

De façon connue, les parois 34, 36 et 38 du rotor du compresseur comprennent des léchettes annulaires externes 46 qui coopèrent par frottement avec des éléments en matériau abradable portés par les redresseurs 24 pour former des joints d'étanchéité du type à labyrinthe.

Les moyens de prélèvement d'air centripète sont montés entre les disques de rotor de deux étages consécutifs du compresseur de la turbomachine. Dans l'exemple représenté, les moyens 12 sont prévus entre les disques 18 et 20 et comprennent des passages radiaux 48 formés dans la paroi 36 du disque 20, et débouchant dans une chambre annulaire 50 définie par les disques 18, 20 et la paroi 36 de liaison de ces disques. Les moyens de prélèvement 12 comprennent également une rangée annulaire de tubes radiaux 51 qui sont agencés dans la chambre 50 et qui sont fixés par des moyens appropriés sur les disques 18 et 20.

Une partie de l'air circulant dans la veine du compresseur passe radialement de l'extérieur vers l'intérieur à travers les passages 48 de la paroi 36 et pénètre dans la chambre annulaire 50. Cet air est ensuite contraint de passer à travers les tubes radiaux 51 pour sortir de cette chambre 50. L'air qui sort des tubes s'écoule axialement vers l'aval autour d'un fourreau cylindrique 52 qui s'étend coaxialement à l'intérieur des disques 18, 20, des tubes 51 et du rouet 26 du compresseur, et de la jante 30 de la turbine. L'air s'écoule axialement jusqu'à la turbine et peut alimenter des systèmes de refroidissement et/ou de ventilation de composants de cette turbine.

Cependant, les tubes radiaux 51 présentent les inconvénients décrits plus haut, et ne permettent pas de réduire les pertes de charge du flux d'air en sortie des passages 48 de la paroi 36 et dans la chambre annulaire 50.

L'invention permet de remédier au moins en partie à ces problèmes grâce à des moyens de guidage du flux d'air jusqu'à un des disques du rotor du compresseur, situé en amont ou en aval des passages de la paroi 36.

L'invention permet de diminuer de manière significative les pertes de charge du flux d'air prélevé et d'envisager le prélèvement de l'air plus en amont sur le compresseur afin de limiter la consommation spécifique de la turbomachine.

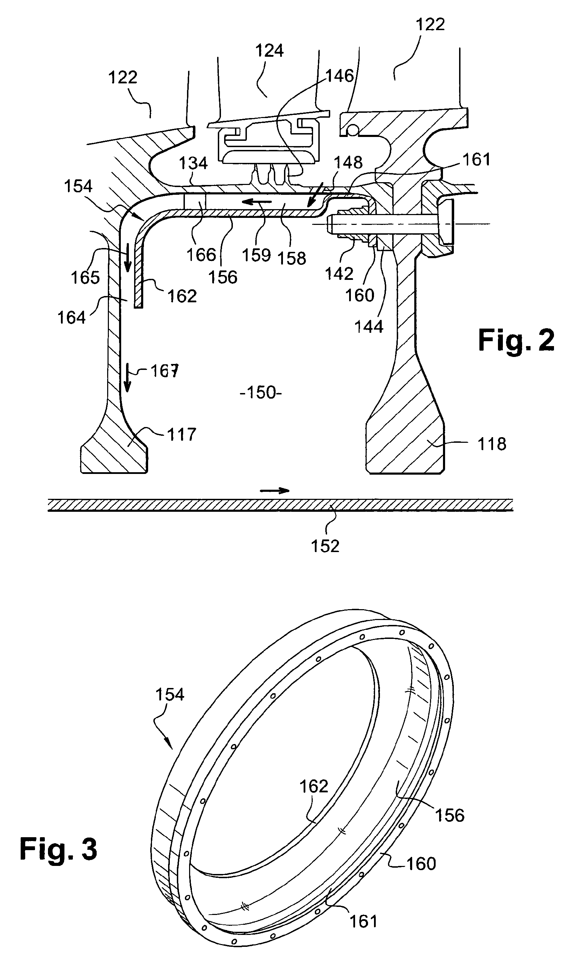

Dans l'exemple représenté en figure 2, les éléments déjà décrits en référence à la figure 1 sont désignés par les mêmes chiffres augmentés d'une centaine. Les moyens de prélèvement d'air sont ici été agencés en amont du disque 118 (correspondant au disque 18 de la figure 1), entre ce disque 118 et un disque 117 d'un étage amont du compresseur.

Les moyens de guidage du flux d'air selon l'invention comprennent une paroi 154 à section sensiblement en L qui est rapportée et fixée dans la chambre 150 le long de la paroi 134 de liaison des disques 117 et 118, cette paroi 154 étant représentée en perspective en figure 3.

La paroi de guidage 154 est réalisée en tôle et s'étend de façon continue sur 360°. En variante, elle peut être sectorisée pour faciliter son montage dans la chambre 150.

Cette paroi de guidage 154 comprend une partie médiane 156 sensiblement cylindrique qui s'étend parallèlement à la paroi 134 et à faible distance radiale de celle-ci, sur une majeure partie de sa dimension axiale. Cette partie cylindrique 156 délimite avec la surface cylindrique interne de la paroi 134 un passage annulaire cylindrique 158 d'écoulement axial du flux d'air prélevé, à section sensiblement constante. Dans l'exemple représenté, le flux d'air prélevé circule axialement d'aval en amont dans le passage 158 (flèche 159).

Les passages 148 de prélèvement d'air sont formés sur une partie d'extrémité aval de la paroi 134, en aval des léchettes 146, et débouchent dans une partie d'extrémité aval du passage annulaire 158. Ces passages 148 sont inclinés par rapport à l'axe de rotation du rotor, d'amont en aval vers l'extérieur. L'air qui passe à travers ces passages 148 est ainsi orienté axialement vers l'amont de façon à faciliter son écoulement axial d'aval en amont dans le passage 158.

La partie cylindrique 156 de la paroi de guidage est reliée à son extrémité aval par une portion cylindrique 161 de plus grand diamètre à une bride annulaire 160 de fixation sur le disque aval 118. Cette bride 160 est appliquée sur la face amont de la bride 144 de la paroi 134 qui est alors serrée axialement à l'aide des moyens de fixation 142 entre la bride 160 et le disque 118. La portion cylindrique aval 161 de la paroi de guidage 154 est en appui radial sur la surface cylindrique interne de la paroi 134, en aval des passages 148 de cette paroi, pour empêcher l'air sortant de ces passages de s'écouler le long du disque 118.

La partie cylindrique 156 de la paroi de guidage 154 est en outre reliée à son extrémité amont à un rebord annulaire 162 qui s'étend sensiblement radialement vers l'intérieur depuis la partie cylindrique. Ce rebord 162 s'étend parallèlement au disque 117 et à faible distance axiale de celui-ci de façon à créer un passage radial 164 d'écoulement centripète du flux d'air prélevé (flèche 165). Le rebord 162 s'étend radialement sur une partie radialement externe seulement du disque 117 car le flux d'air prélevé s'écoule naturellement en fonctionnement le long du disque 117 et jusqu'au fourreau 152 en formant des couches d'Ekman (flèche 167). Ce fourreau 152 a une dimension axiale supérieure à celle du fourreau de la figure 1 et s'étend axialement à l'intérieur des disques 117 et 118.

Dans l'exemple représenté, des moyens formant butée sont rapportés et fixés sur la surface externe de la partie cylindrique 156 de la paroi de guidage 154. Ces moyens de butée comprennent des plots 166 régulièrement répartis autour de l'axe de rotation du rotor. Ces plots 166 ont leurs extrémités radialement externes en appui radial sur la surface cylindrique interne de la paroi 134 de façon à limiter les vibrations et les déformations en flexion de la paroi de guidage 154 en fonctionnement.

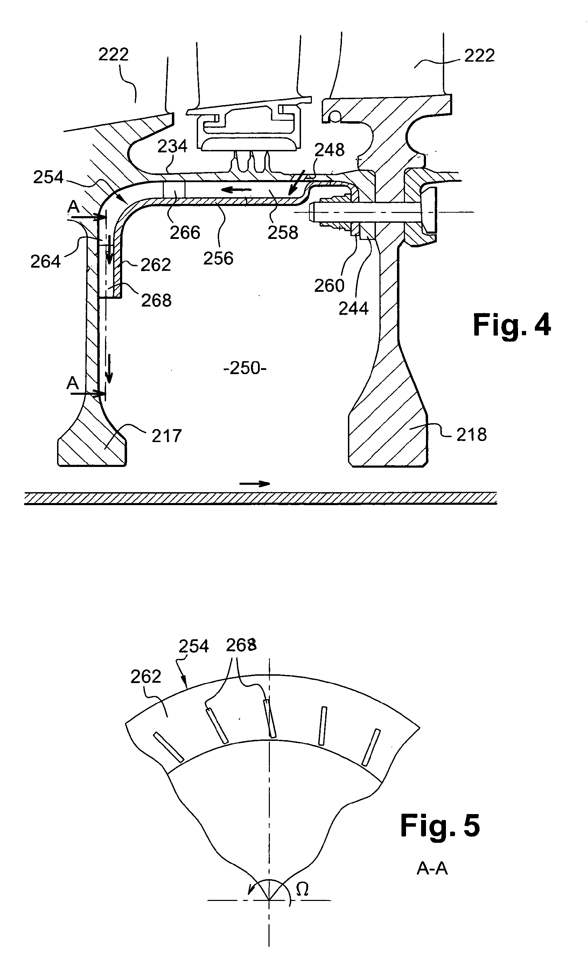

Dans la variante représentée aux figures 4 et 5, les éléments déjà décrits dans la figure 2 sont désignés par les mêmes chiffres augmentés d'une centaine. La paroi de guidage 254 comprend ici des ailettes 268 supplémentaires qui sont rapportées et fixées sur la face annulaire amont du rebord 262 de la paroi.

Ces ailettes 268 sont régulièrement réparties autour de l'axe de rotation du rotor et sont en appui axial à leurs extrémités amont sur le disque 217.

Comme cela est visible en figure 5, ces ailettes sont inclinées pour redresser l'air circulant à travers le passage radial 264 et pour réduire la vitesse de cet air afin que celle-ci ne dépasse pas la vitesse du disque 217 (Ke = 1). L'inclinaison des ailettes est ici telle qu'elle entraîne un phénomène d'aspiration de l'air lors de son écoulement centripète.

Dans encore une autre variante non représentée, les passages 148, 248 de prélèvement d'air sont formés sur une partie d'extrémité amont de la paroi 134, 234, et l'air prélevé est destiné à être guidé par la paroi cylindrique 154, 254 axialement d'amont en aval jusqu'au disque 118, 218 situé en aval des passages. La paroi de guidage 154, 254 est dans ce cas montée dans la chambre inter-disques 150, 250 de façon à ce que sa bride de fixation 160, 260 soit située en amont et non plus en aval, et les passages 148, 248 de la paroi 134, 234 peuvent s'étendre d'amont en aval vers l'intérieur.

La température de l'air prélevé est de l'ordre de 500K et le débit d'air prélevé est de l'ordre de 100 g/s.

## Revendications

1. Rotor de compresseur d'une turbomachine, comprenant au moins deux disques coaxiaux (117, 118, 217, 218) portant des aubes et reliés entre eux par une paroi de révolution coaxiale (134, 234) sensiblement cylindrique, et des moyens de prélèvement d'air centripète comportant des passages d'air (148, 248) traversant la paroi et débouchant dans une chambre (150, 250) formée à l'intérieur de la paroi de révolution et définie par cette dite paroi de révolution et les deux disques, **caractérisé en ce qu'**une paroi (154, 254) de guidage d'air est montée dans la chambre et comporte une partie (156, 256) sensiblement cylindrique qui s'étend le long de la paroi de révolution (134, 234) pour définir avec cette paroi un passage annulaire (158, 258) d'écoulement axial du flux d'air sortant des passages, jusqu'à un des disques du rotor, la paroi de guidage (154, 254) comprenant à une extrémité un rebord annulaire radial (162, 262) qui s'étend le long d'un des disques (117, 217) en direction de l'axe de rotation.

2. Rotor selon la revendication 1, **caractérisé en ce que** les passages d'air (148, 248) de la paroi sont inclinés par rapport à l'axe du rotor.

3. Rotor selon la revendication 1 ou 2, **caractérisé en ce que** les passages d'air (148, 248) sont formés la paroi (134, 234), en aval d'un joint à labyrinthe (146, 246) destiné à coopérer avec un redresseur monté entre les deux disques (117, 118, 217, 218) du rotor.

4. Rotor selon l'une des revendications précédentes, **caractérisé en ce que** la paroi de guidage (154, 254) est rapportée et fixée sur l'un des disques (117, 118, 217, 218), à l'intérieur de la chambre (150, 250).

5. Rotor selon la revendication 4, **caractérisé en ce que** la paroi de guidage (154, 254) comprend à une extrémité une bride annulaire (160, 260) de fixation sur une bride annulaire (144, 244) de la paroi de révolution (134, 234) et sur l'un des disques (117, 118, 217, 218).

6. Rotor selon l'une des revendications 1 à 5, **caractérisé en ce que** le passage annulaire axial (158, 258) d'écoulement du flux d'air est à section sensiblement constante.

7. Rotor selon l'une des revendications 1 à 6, **caractérisé en ce que** la partie cylindrique (156, 256) de la paroi de guidage porte des plots (166, 266) d'appui sur la paroi de révolution (134, 234) pour limiter les vibrations et la flexion de la paroi de guidage (154, 254) en fonctionnement.

8. Rotor selon la revendication 7, **caractérisé en ce que** le rebord radial (262) porte des ailettes (268) de redressement et/ou de ralentissement du flux d'air qui sont appliquées sur le disque (217).

9. Rotor selon la revendication 8, **caractérisé en ce que** les ailettes (268) sont inclinées de façon à produire en fonctionnement un effet d'aspiration du flux d'air.

10. Rotor selon la revendication 8, **caractérisé en ce que** l'extrémité de la paroi de guidage (154, 254), opposée au rebord radial (162, 262), est appliquée sur la paroi de révolution (134, 234) et empêche l'air sortant des passages traversants (148, 248) de s'écouler le long de l'autre disque (118, 218).

11. Rotor selon l'une des revendications 1 à 10, **caractérisé en ce que** la paroi de guidage (154, 254) est réalisée en matériau métallique léger ou en matériau composite.

12. Turbomachine, telle qu'un turboréacteur ou un turbopropulseur d'avion, **caractérisée en ce qu'**elle comprend un rotor de compresseur selon l'une des revendications précédentes.

## Patentansprüche

1. Verdichterrotor einer Turbomaschine bzw. eines Turbotriebwerks, enthaltend zumindest zwei koaxiale Scheiben (117, 118, 217, 218), die Schaufeln tragen und über eine im Wesentlichen zylindrische, koaxiale Umlaufwand (134, 234) miteinander verbunden sind, sowie Mittel zum zentripetalen Ablassen von Luft, welche Luftdurchlässe (148, 248) aufweisen, die die Wand durchsetzen und in eine Kammer (150, 250) münden, die im Inneren der Umlaufwand ausgebildet ist und von dieser sogenannten Umlaufwand und den beiden Scheiben definiert wird, **dadurch gekennzeichnet, dass** eine Wand (154, 254) zum Führen von Luft in der Kammer montiert ist und einen im Wesentlichen zylindrischen Abschnitt (156, 256) aufweist, der sich entlang der Umlaufwand (134, 234) erstreckt, um mit dieser Wand einen ringförmigen Durchlass (158, 258) zum axialen Strömen des aus den Durchlässen austretenden Luftstroms bis zu einer der Scheiben des Rotors zu definieren, wobei die Führungswand (154, 254) an einem Ende eine radial verlaufende ringförmige Randleiste (162, 262) aufweist, die sich entlang einer der Scheiben (117, 217) in Richtung der Rotationsachse erstreckt.

2. Rotor nach Anspruch 1, **dadurch gekennzeichnet, dass** die Luftdurchlässe (148, 248) der Wand gegenüber der Achse des Rotors geneigt verlaufen.

3. Rotor nach Anspruch 1 oder 2, **dadurch gekennzeichnet, dass** die Luftdurchlässe (148, 248) in der Wand (134, 234) stromabwärts einer Labyrinthdichtung (146, 246) ausgebildet sind, die dazu bestimmt ist, mit einem Gleichrichter zusammenzuwirken, der zwischen den beiden Scheiben (117, 118, 217, 218) des Rotors angebracht ist.

4. Rotor nach einem der vorangehenden Ansprüche, **dadurch gekennzeichnet, dass** die Führungswand (154, 254) im Inneren der Kammer (150, 250) an eine der Scheiben (117, 118, 217, 218) angesetzt und daran befestigt ist.

5. Rotor nach Anspruch 4, **dadurch gekennzeichnet, dass** die Führungswand (154, 254) an einem Ende einen ringförmigen Flansch (160, 260) zum Befestigen an einem ringförmigen Flansch (144, 244) der Umlaufwand (134, 234) und an eine der Scheiben (117, 118, 217, 218) aufweist.

6. Rotor nach einem der Ansprüche 1 bis 5, **dadurch gekennzeichnet, dass** der axial verlaufende, ringförmige Durchlass (158, 258) zum Strömen des Luftstroms einen im Wesentlichen konstanten Querschnitt hat.

7. Rotor nach einem der Ansprüche 1 bis 6, **dadurch gekennzeichnet, dass** der zylindrische Abschnitt (156, 256) der Führungswand Abstützzapfen (166, 266) zum Abstützen an der Umlaufwand (134, 234) trägt, um die Vibrationen und die Biegung der Führungswand (154, 254) im Betrieb zu begrenzen.

8. Rotor nach Anspruch 7, **dadurch gekennzeichnet, dass** die radiale Randleiste (262) Rippen (268) zum Gleichrichten und/oder Verzögern des Luftstroms trägt, die auf die Scheibe (217) aufgebracht sind.

9. Rotor nach Anspruch 8, **dadurch gekennzeichnet, dass** die Rippen (268) so geneigt verlaufen, dass sie im Betrieb eine Saugwirkung für den Luftstrom erzeugen.

10. Rotor nach Anspruch 8, **dadurch gekennzeichnet, dass** das der radialen Randleiste (162, 262) entgegengesetzte Ende der Führungswand (154, 254) an der Umlaufwand (134, 234) angebracht ist und die aus den durchgehenden Durchlässen (148, 248) austretende Luft daran hindert, entlang der anderen Scheibe (118, 218) zu strömen.

11. Rotor nach einem der Ansprüche 1 bis 10, **dadurch gekennzeichnet, dass** die Führungswand (154, 254) aus einem Leichtmetallmaterial oder Verbundmaterial hergestellt ist.

12. Turbomaschine bzw. Turbinentriebwerk, wie etwa Turbostrahltriebwerk oder Turbopropellertriebwerk für Flugzeuge, **dadurch gekennzeichnet, dass** sie bzw. es einen Verdichterrotor nach einem der vorangehenden Ansprüche aufweist.

## Claims

1. A compressor rotor of a turbomachine, comprising at least two coaxial disks (117, 118, 217, 218) carrying blades and connected together by a generally tubular wall forming a surface of revolution coaxially (134, 234) about the axis of the disk; centripetal air bleed means comprising air passages (148, 248) passing through the wall and opening out into a chamber (150, 250) formed inside the tubular wall and between the two disks; **characterized in that** an air-guide wall (154, 254) mounted inside the chamber and comprising a substantially cylindrical portion (156, 256) extending along the tubular wall (134, 234) to define with the wall an annular passage (158, 258) for axial flow of the air stream leaving the passages and extending up to one of the disks of the rotor, the guide wall (154, 254) comprising at one of its ends an annular radial rim (162, 262) extending along one of the disk (117, 217) toward the rotation axis.

2. A rotor according to claim 1, **characterized in that** the air passages (148, 248) through the wall are inclined relative to the axis of the rotor.

3. A rotor according to claims 1 or 2, **characterized in that** the air passages (148, 248) are formed through a downstream end portion of the wall (134, 234), downstream from a labyrinth (146, 246) seal for cooperating with a nozzle mounted between the two disks (117, 118, 217, 218) of the rotor.

4. A rotor according to one of the preceding claims, **characterized in that** the guide wall (154, 254) is fitted against and fastened to one of the disks (117, 118, 217, 218) inside the chamber (150, 250).

5. A rotor according to claim 4, **characterized in that** the guide wall (154, 254) includes an annular flange (160, 260) at one end for fastening to an annular flange (144, 244) of the tubular wall (134, 234) and to one of the disks (117, 118, 217, 218).

6. A rotor according to one of claims 1 to 5, **characterized in that** the axial annular flow passage (158, 258) for the air stream is of a section that is substantially constant.

7. A rotor according to one of claims 1 to 6, **characterized in that** the cylindrical portion (156, 256) of the guide wall carries studs (166, 266) bearing against the tubular wall (134, 234) to limit vibration and bending of the guide wall (154, 254) in operation.

8. A rotor according to claim 7, **characterized in that** the radial rim (262) carries fins (268) for deflecting and/or slowing down the air stream, which fins are pressed against the disk (217).

9. A rotor according to claim 8, **characterized in that** the fins (268) are inclined so that, in operation, they produce a suction effect on the air stream.

10. A rotor according to claim 8, **characterized in that** the end of the guide wall (154, 254) opposite from the radial rim (162, 262) is pressed against the tubular wall (134, 234) and prevents air leaving the through passages (148, 248) from flowing along the other disk (118, 218).

11. A rotor according to one of claims 1 to 10, **characterized in that** the guide wall (154, 254) is made of a light metallic material or of a composite material.

12. A turbomachine, an airplane turboprop, or a turbojet, **characterized in that** it comprises a compressor rotor according to one of the preceding claims.
